# EUROPEAN PATENT SPECIFICATION

(11) **EP 1 848 613 B1**
(45) Date of publication and mention of the grant of the patent: **22.09.2010**
(21) Application number: 06718395.4
(22) Date of filing: 12.01.2006
(51) Int. Cl.: B60R 21/20

(54) **AIRBAG MODULE**
AIRBAGMODUL
MODULE D'AIRBAG

(30) Priority: 18.02.2005 US 654220 P
(43) Date of publication of application: 31.10.2007
(73) Proprietor: KEY SAFETY SYSTEMS, INC., Sterling Heights, MI 48314 (US)
(72) Inventor: MANIRE, Gregory, Oxford, Michigan 48371 (US); TREPIAK, Ken, St. Clair, Michigan 48079-5123 (US)
(74) Representative: Gislon, Gabriele
(86) International application number: PCT/US2006/001313
(87) International publication number: WO 2006/091287

(56) References cited:
- KR-A- 19980 035 145
- KR-A- 19990 019 985
- US-A- 5 364 123
- US-A- 5 433 471
- US-A- 5 433 472
- US-A1- 2004 090 049
- US-B2- 6 513 835

## Description

The invention provides an airbag module having fewer parts and an improved bracket with a reactive or spring-like portion.

US 2004/0090049 concerns an airbag inflator bracket having an elongated plate portion and two flange portions that extend transverse from two opposite :ends of the plate portion. The first flange portion has a doomed surface for receiving the outer domed surface of the inflator, while the second flange portion of the bracket has a circular aperture intended to engage the tapered portion of the inflator where is located the initiator.

The airbag inflator is inserted between the two opposite flange portions which exert a clamping force on the inflator. In fact, the two end portions of the inflator urges the flange portions of the bracket to deflect away from each other.

US 5433472 discloses an airbag module with a canister for securing the bag inflator.

The canister comprises a first side wall having an aperture, and a second side wall with a elastically flexible portion which is directed toward the first side wall, and which secures the inflator into position. In fact, one end of the inflator, having a stud attached thereto, is inserted into the aperture provided in the first side wall of the canister, while the flexible portion on the second side wall of the canister engages with the second end of the inflator and pushes it toward the first side wall of the canister. Thus the inflator is blocked into position between the two opposite side wall of the canister.

The invention comprises an airbag module having an inflator for providing inflation gas, and a bracket with an integral spring portion for resiliently biasing the inflator toward a retained position.
Figure 1 shows components an airbag module of the invention.
Figure 2 is an isometric view of a bracket assembly.
Figure 2a is an end view of the bracket assembly of Figure 2.
Figure 3 shows the inflator partially in the bracket.
Figure 4 is an end view of the inflator and bracket assembly of Figure 3.

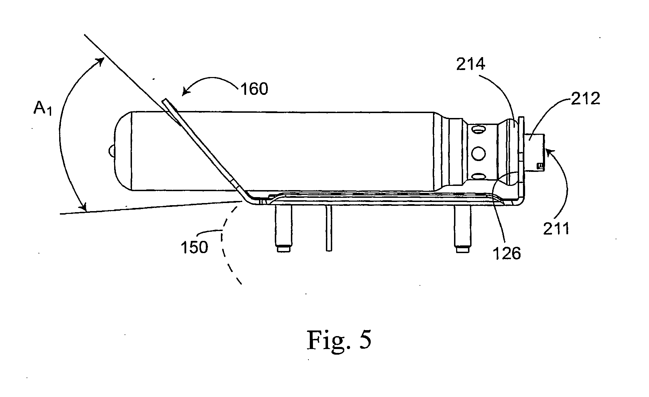

Figure 5 shows the inflator fully assembled to the bracket assembly.
Figure 6 is a cross-sectional view of a side impact airbag module.
Figure 7 shows the airbag module of Figure 6 installed in a vehicle seat.
Figure 8 shows an alternate embodiment of the invention.

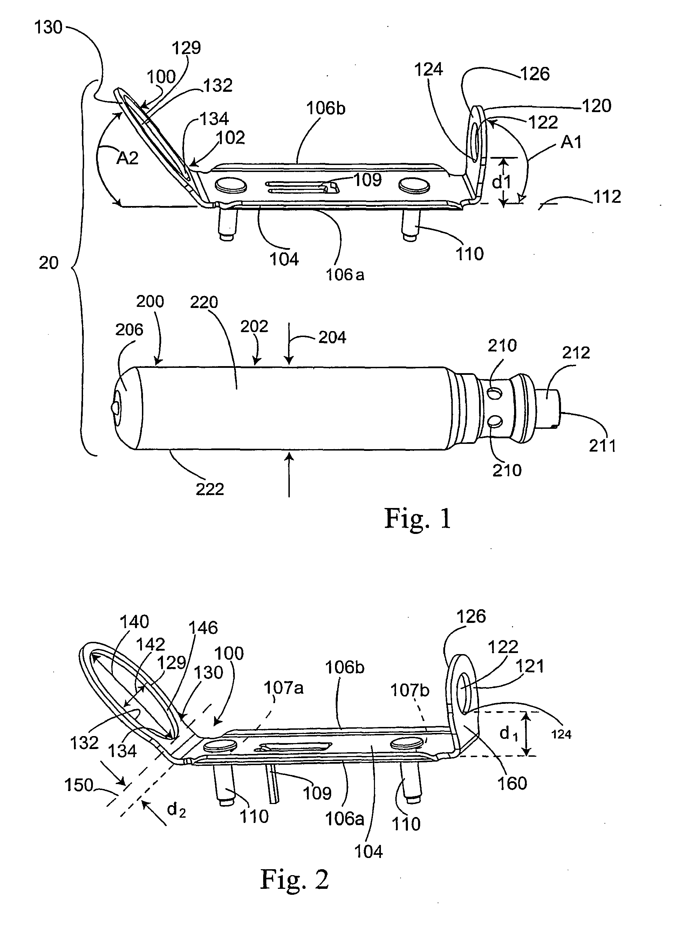

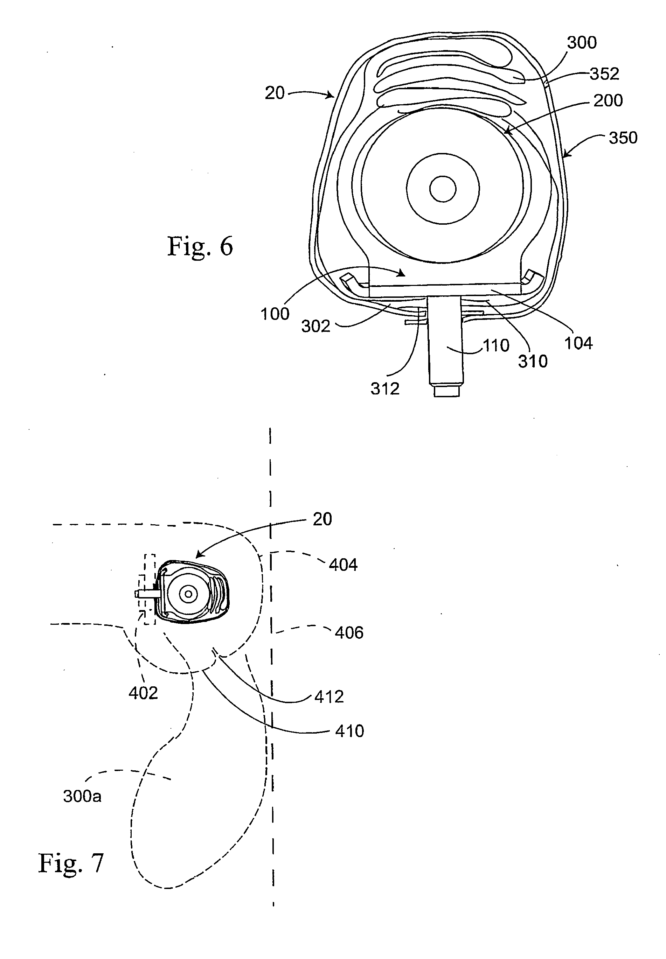

Figure 1 shows components of an airbag module 20 in accordance with the invention. The airbag module 20 comprises a bracket assembly 100, an inflator 200, and an airbag 300 (shown in Figure 6). The airbag 300, once configured in a rolled or folded condition, is maintained in this condition by a thin wrapping 310 as shown in Figure 6. In certain installations, as known in the art, the airbag module may also include a cover about the thin wrapping for protecting the folded airbag and inflator.

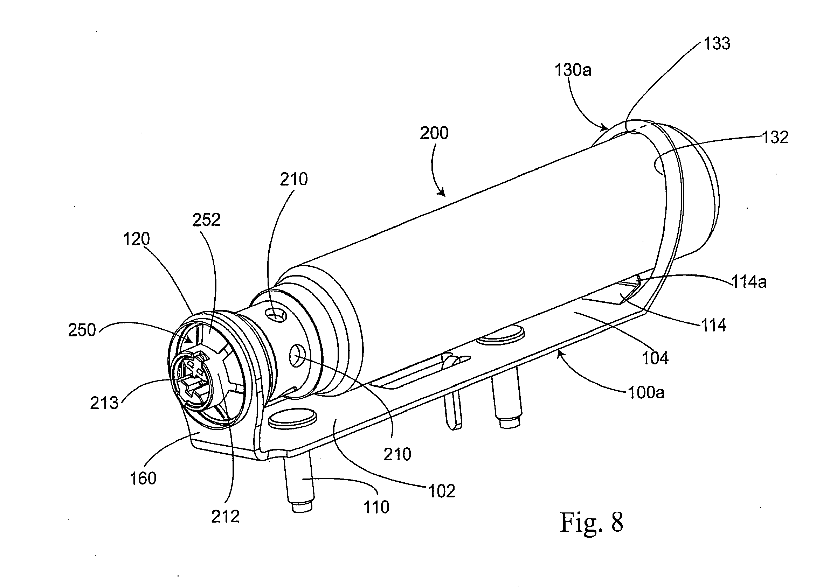

The bracket assembly 100 includes a stamped bracket 102, preferably steel, having a central, elongated plate portion 104 generally located in the middle of the bracket. The bracket 102 transitions into opposingly situated upraised sides 106a, 106b that are parallel to a longitudinal axis 112 of the plate portion 104. The upraised sides 106a, 106b are optional as illustrated in the alternate embodiment shown in Figure 8.

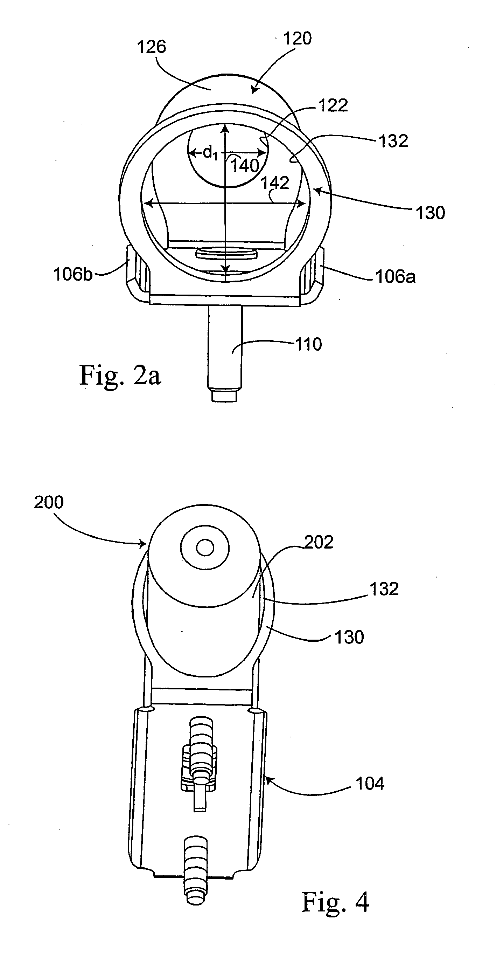

The plate portion 104 has a plurality of mounting openings107a, b therethrough as shown in Figure 2. In the bracket assembly 100 each mounting opening 107a, b receives a suitable fastener such as a threaded mounting stud 110. Each mounting stud 110 is adapted to be secured to a frame member within the vehicle. The bracket 102 has two opposed bracket ends 120, 130. The plate portion 104 shown in Figure 2 includes a stamped feature in the form of a tab 109. The tab is used to identify brackets to be used on left or right-hand vehicle seats or other similar mounting locations. In some brackets the tab 109 is bent down as illustrated in Figure 2; in other brackets the tab is formed but not bent, or not formed at all.

The first bracket end 120 is integrally formed as a one-piece component with the plate portion 104 and includes a first inflator-receiving opening 122. The lower extent 124 of the first inflator-receiving opening 122 is spaced a distance d1 from the top of the plate portion 104, which is helpful in orienting and positioning the inflator. During fabrication of the bracket the first bracket end 120 is bent upwardly (from its initial planar configuration) by an angle A1 (see Figure 1) from the plane 112 of the plate portion 104, as illustrated in the figures. The first inflator-receiving opening 122 is preferably circular in shape, but in general the shape of the first inflator-receiving opening 122 will conform to the shape of a mating part of the inflator or at least permit passage of this mating part therethrough. In a preferred embodiment the first bracket end 120 is bent upwardly by about 85 degrees (A1 = 85 degrees).

The second bracket end 130 is flexible and is integrally formed as part of the plate portion 104 with the first bracket end 120, and comprises an oblong shaped rim 129 that defines an second inflator-receiving opening 132 that has an oblong shape. The bottom 134 of the oblong second inflator-receiving opening 132 is spaced a distance d2 from the plate portion 104 to position and orient the inflator. The second bracket end 130 is bent upward from the plane of the plate portion 104 by an angle A2. In a preferred embodiment angle A2 is approximately 35 degrees.

In Figures 2 and 2a, the oblong second inflator-receiving opening 132 has a major diameter 140 and a minor diameter 142. In Figure 1 the inflator 200 is generally cylindrical in shape and includes a major body portion 202, which is circular in cross section. The diameter of the major body portion 202 is slightly smaller than the minor diameter 142 of the oblong second inflator-receiving opening 132 to permit passage of the inflator within the oblong second inflator-receiving opening 132.

The illustrated inflator 200 is a stored-gas inflator, which includes a gas, such as air, argon or helium or any combination thereof. The stored gas inflator 200 has a pyrotechnic element or elements, which include at least one initiator 211 that is capable of initiating the release of the stored gas or heating the stored gas prior to exiting a plurality of exit ports 210. The initiator receives an activation signal from an associated controller (not shown). The inflator includes a cylindrically shaped mounting end 212 (which houses the initiator 211 and the initiator's electrical connector 213, (see Figure 8), which is insertable through the first inflator-receiving opening 122 of the bracket assembly 100. In a preferred embodiment, the diameter of the cylindrically shaped mounting end 212 of the inflator is slightly smaller than the diameter of the first inflator-receiving opening 122.

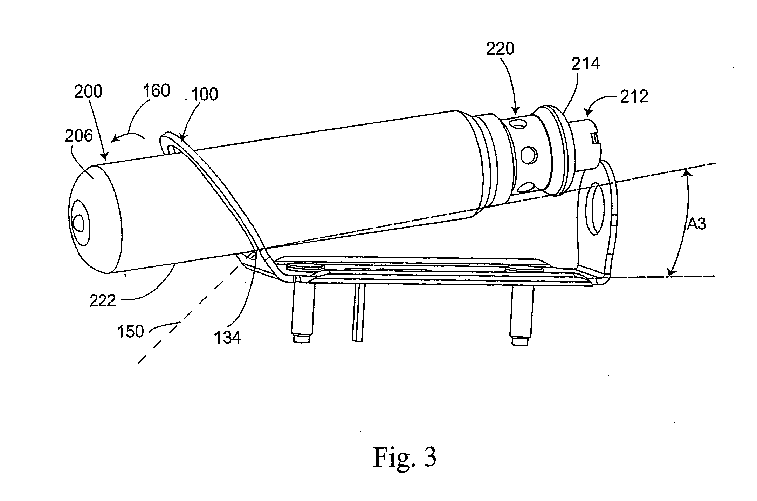

Figure 3 illustrates the inflator 200 in a partially assembled configuration relative to the bracket assembly 100. In this configuration the large end 206 of the inflator has been inserted within the oblong second inflator-receiving opening 132 of the second bracket end 130. In this configuration, in view of the fact the minor diameter of the oblong second inflator-receiving opening 132 is generally larger than the outside diameter 206 of the major body portion 202 of the inflator, the inflator is easily inserted within the opening. With the inflator 200 partially inserted within opening the oblong second inflator-receiving opening 132, the lower side or bottom 222 of the inflator 200 engages the lower extremes 146 or bottom 134 of the oblong second inflator-receiving opening 132, which provides an effective pivot point about which the inflator will rotate. As the inflator 200 is positioned in the oblong second inflator-receiving opening 132, the plate portion 104 of the bracket is maintained in a generally horizontal orientation.

The inflator 200 will seek a stable angular orientation, as the inflator rotates about the pivot point until the upper side or top 220 of the inflator engages the top or apex 144 of the oblong second inflator-receiving opening 132, at which time the inflator 200 will be oriented at an angle A3 relative to the plate portion 104. Thereafter the end 212 of the inflator 200 is pushed into contact with the inner side or face126 of the first bracket end 120, as shown in Figure 3. Angle A3 is proportional to the relative size of the major diameter 144 and the diameter of the inflator. For example, the angle A3 will decrease with increasing major diameters. In Figure 3 the end 212 of the inflator 200 is positioned adjacent the inner side 126 of the first bracket end 120. In the intermediary configuration the geometric center of the circular end 212 is slightly above the geometric center of the circular first inflator-receiving opening 122.

With the inflator and bracket in the condition as described in Figure 3, the inflator 200 is rotated downwardly relative to the plate portion 104 of the bracket while the inflator remains in the second inflator-receiving opening 132. As the inflator is rotated, it remains in contact with the bracket 100 at the top or apex 144 of the second inflator-receiving opening 132, as well as at the bottom or nadir 134 of the second inflator-receiving opening 132. The sharp edges of the bracket 100 about the second inflator-receiving opening 132 hold the inflator 200 in place.

Figure 4 is an isometric view of the partially assembled inflator/bracket assembly of Figure 3. The relationship between the size of the body 202 and the second inflator-receiving opening 132 can be seen more clearly in this Figure 4. To complete the assembly of the inflator 200 to the bracket, the inflator 200 is forcibly rotated downwardly as illustrated by arrow 220, of Figure 3, positioning end 212 in alignment with the first inflator-receiving opening 122. As the inflator rotates, the inflator will bend or rotate the second bracket end 130 about an axis 150. As the second bracket end 130 rotates, it retains its elastic characteristics and acts as a spring, generating upon the inflator a bias force in the direction of arrow 160 (see Figures 3 and 4) opposite to the direction of rotation. The second bracket end 130 is configured as an integral spring steel portion of the bracket. As the inflator is rotated, end 212 of the inflator 220 slides upon face 126 of the first bracket end 120, pushing the first bracket end in a direction away from the second bracket end (the opposite end of the inflator being retained in the second inflator-receiving opening 132). When the inflator end 212 is in alignment with the first inflator-receiving opening 122, the inflator end 212 snaps into the first inflator-receiving opening 122 of the first bracket end 120, which returns to its initial orientation at angle A2. Thereafter the inflator is forcibly moved to the right as illustrated in Figure 3 so the end 212 of the inflator moves through the first inflator-receiving opening 122 until the enlarged portion 214 of the inflator becomes butted against the inner side or face 126 of the first bracket end 120.

Spring force created by the bending of the second bracket end 130 is sufficient to prevent the inflator from moving relative to the bracket in an axial direction. An additional snap ring or retainer can be inserted upon the extending end portion of end 212 and pushed inwardly until it engages the outer side 160 of the first bracket end 120. Such a spring retainer 250 is shown in Figure 8. The spring retainer has a plurality of spring fingers 252 fitted to the extending portion of end 212.

Figure 6 is a cross-sectional view showing a portion of the bracket assembly 100 and inflator 200 with one of the mounting fasteners 110 extending through the plate portion 104 of the bracket. Figure 6 also illustrates the assembled module 20. The module includes an airbag 300. In the illustrated embodiment the airbag, which is of conventional construction, includes an opening or neck portion 302 into which the inflator-bracket subassembly has been inserted. Thereafter, the opposing flaps 310, 312 of the airbag 300 are positioned upon the mounting studs 110 with each mounting stud 110 entering and passing through a respective opening in each of the flaps 310, 312. Thereafter, the airbag is configured into a compact pre-inflation configuration, such as being rolled or folded or a combination thereof. This compact configuration is maintained in a known manner by enveloping the folded airbag with a breakable, protective covering 350. The covering is typically manufactured of a Tyvek or a paper-like material having a plurality of perforations 352 that rupture upon inflation of the airbag. A breakable thicker plastic cover (not shown) can envelop the covering 350.

Figure 7 illustrates the module 20 installed on a section of a frame 402 of a portion of the vehicle. In the preferred embodiment, this frame 402 is an outside frame section of a vehicle seat 404. The outside frame section is adjacent, for example, a vehicle door 406. The airbag module 20 is further encapsulated within the seat upholstery 410, which is often of a multi-layered construction. The upholstery typically will include a weakened point, region or area generally designated as 412, which is ruptured as the airbag inflates, thereby providing a channel or guide for the inflating airbag, the inflated airbag being shown by phantom line 300a. In operation, once associated sensors of the vehicle sense an actual or impending collision, an activation signal is sent to the igniter 211 of the inflator 200, which provides the supply or the generation of inflation gas, which is communicated to the airbag through inflator ports 210. The airbag is then inflated, rupturing the protective enveloping covering 350 as well as the seat cushion upholstery 410.

Figure 8 shows an alternate embodiment of the invention. The bracket 100a has a flat plate portion 104 (without upraised edges) and a first bracket end 120 to receive an end 212 of the inflator and to support a snap ring 250. The bracket 100a includes an opposite second bracket end 130a having an inflator-receiving opening 132. The second bracket end 130a is formed as an integral part of the bracket 100a and is bent upwardly from the plate portion 104 to a fixed position and orientation. The inflator-receiving opening 132 is larger than the diameter of the inflator as in the case with the earlier embodiment. In this embodiment the second bracket end 130a serves to hold the inflator 200 in place but does not provide a spring function. The spring function is provided by a spring formed as an extending part, lever or spring tab 114 extending from the plate portion 104. Initially, an end 114a of the tab 114 is configured to be above the plane of the plate portion 104 to interfere with the inflator as the inflator 200 is inserted within inflator-receiving opening 132. The spring or spring tab 114 urges the inflator 200 against a top region 133 of the opening 132.

The illustrated embodiment of the invention is a side airbag module; however, the invention can be implemented with curtain, passenger and driver airbag modules.

## Claims

1. An airbag module (20) comprising: an inflator (200) for providing inflation gas to an airbag (300); and a bracket (100; 100a) having plate portion (104), a first bracket end (120) extending from the plate portion (104) oriented at a non-perpendicular angle relative to the plate portion (104), and a second bracket end (130) oriented at an initial first non-perpendicular angle relative to a plane of the plate portion, wherein the first bracket end (120) includes a first inflator-receiving opening (122) and the second bracket end (130; 130a) includes a second inflator-receiving opening (132), *wherein said second bracket end (130; 130a) is flexible or provided with a spring formed as an extending part, lever or spring tab exerting a spring function,* a portion of the second bracket end (130) being deformable by movement of the inflator (200) into a retained position wherein the inflator is located in both of the inflator-receiving openings, ***characterized in that** said second inflator-receiving opening (132) has an oblong shape and **in that** the major body portion (202) of the inflator (200) insertable into said second inflator-receiving opening (132) is smaller than the second inflator-receiving opening (132) to permit the passage of the inflator within said oblong second inflator-receiving opening (132).*

2. An airbag module (20) according to Claim 1 wherein the second bracket end (130; 130a) is configured to engage the inflator (200) near a top and a bottom of the second opening (132) as the inflator (200) is moved to the retained position and to be bent as the inflator (200) is so positioned.

3. An airbag module (20) according to either of Claims 1 or 2 wherein the second bracket end (130; 130a) is configured to be bent by the inflator (200) as the inflator (200) is received within the bracket (100), the second bracket end (130; 130a) being further configured to provide a spring force upon the inflator (200), urging the inflator (200) into the first inflator-receiving opening (122).

4. An airbag module (20) according to any one of claims 1 through 3 wherein the second bracket end (130; 130a) is initially oriented at a predetermined angle and bent upwardly to a lesser angle by operation of the inflator.

5. An airbag module (20) according to any one of claims 1 through 4 wherein the first bracket end (120) is configured to bend end in a direction away from the second bracket end bend (130; 130a) upon receipt of the inflator (200) and return to its initial configuration upon receipt of the inflator.

## Patentansprüche

1. Airbag-Modul (20), das aufweist: einen Gasgenerator (200) für das Liefern von Aufblasgas zu einem Airbag (300); und eine Halterung (100; 100a) mit einem Plattenabschnitt (104), einem ersten Halterungsende (120), das sich vom Plattenabschnitt (104) erstreckt, ausgerichtet unter einem nichtsenkrechten Winkel relativ zum Plattenabschnitt (104), und einem zweiten Halterungsende (130), ausgerichtet unter einem anfänglichen ersten nichtsenkrechten Winkel relativ zu einer Ebene des Plattenabschnittes, wobei das erste Halterungsende (120) eine erste Gasgeneratoraufnahmeöffnung (122) und das zweite Halterungsende (130; 130a) eine zweite Gasgeneratoraufnahmeöffnung (132) umfasst, wobei das zweite Halterungsende (130; 130a) elastisch ist oder mit einer Feder versehen ist, die als ein ausziehbares Teil, ein Hebel oder eine Federnase ausgebildet ist, die eine Federfunktion ausüben, wobei ein Abschnitt des zweiten Halterungsendes (130) durch die Bewegung des Gasgenerators (200) in eine Halteposition verformbar ist, wobei sich der Gasgenerator in beiden der Gasgeneratoraufnahmeöffnungen befindet, **dadurch gekennzeichnet, dass** die zweite Gasgeneratoraufnahmeöffnung (132) eine längliche Form aufweist, und **dadurch**, dass der Hauptkörperabschnitt (202) des Gasgenerators (200), der in die zweite Gasgeneratoraufnahmeöffnung (132) eingesetzt werden kann, kleiner ist als die zweite Gasgeneratoraufnahmeöffnung (132), um den Durchgang des Gasgenerators innerhalb der länglichen zweiten Gasgeneratoraufnahmeöffnung (132) zu gestatten.

2. Airbag-Modul (20) nach Anspruch 1, bei dem das zweite Halterungsende (130; 130a) ausgebildet ist, um mit dem Gasgenerator (200) nahe einer Oberseite und einer Unterseite der zweiten Öffnung (132) in Eingriff zu kommen, während der Gasgenerator (200) in die Halteposition bewegt wird, und um gebogen zu werden, während der Gasgenerator (200) so positioniert wird.

3. Airbag-Modul (20) nach entweder Anspruch 1 oder 2, bei dem das zweite Halterungsende (130; 130a) so ausgebildet ist, dass es durch den Gasgenerator (200) gebogen wird, während der Gasgenerator (200) innerhalb der Halterung (100) aufgenommen wird, wobei das zweite Halterungsende (130; 130a) außerdem so ausgebildet ist, dass eine Federkraft auf den Gasgenerator (200) bewirkt wird, die den Gasgenerator (200) in die erste Gasgeneratoraufnahmeöffnung (122) treibt.

4. Airbag-Modul (20) nach einem der Ansprüche 1 bis 3, bei dem das zweite Halterungsende (130; 130a) anfangs unter einem vorgegebenen Winkel ausgerichtet ist und nach oben zu einem kleineren Winkel durch den Betrieb des Gasgenerators gebogen wird.

5. Airbag-Modul (20) nach einem der Ansprüche 1 bis 4, bei dem das erste Halterungsende (120) so ausgebildet ist, dass das Ende in einer Richtung weg von der Biegung des zweiten Halterungsendes (130; 130a) bei der Aufnahme des Gasgenerators (200) gebogen wird und in seine anfängliche Konfiguration bei der Aufnahme des Gasgenerators zurückkehrt.

## Revendications

1. Module de coussin d'air (20), comprenant un dispositif de gonflement (200) pour fournir du gaz de gonflement à un coussin d'air (300) ; et une console (100; 100a) comportant une partie de plaque (104), une première extrémité de la console (120) s'étendant à partir de la partie de plaque (104), orientée à un angle non perpendiculaire par rapport à la partie de plaque (104), et une deuxième extrémité de la console (130) orientée à un premier angle initial non perpendiculaire par rapport à un plan de la partie de plaque, la première extrémité de la console (120) englobant une première ouverture de réception du dispositif de gonflement (122), et la deuxième extrémité de la console (130 ; 130a) englobant une deuxième ouverture de réception du dispositif de gonflement (132), ladite deuxième extrémité de la console (130; 130a) étant flexible ou comportant un ressort, constituant une partie à extension, un levier ou une patte de ressort exerçant une fonction de ressort, une partie de la deuxième extrémité de la console (130) pouvant être déformée par le déplacement du dispositif de gonflement (200) vers une position de retenue, le dispositif de gonflement étant agencé dans les deux ouvertures de réception du dispositif de gonflement, **caractérisé en ce que** ladite deuxième ouverture de réception du dispositif de gonflement (132) a une forme oblongue et **en ce que** la partie majeure du corps (202) du dispositif de gonflement (200), pouvant être insérée dans ladite deuxième ouverture de réception du dispositif de gonflement (132), est plus petite que la deuxième ouverture de réception du dispositif de gonflement (132), pour permettre le passage du dispositif de gonflement dans ladite deuxième ouverture oblongue de réception du dispositif de gonflement (132).

2. Module de coussin d'air (20) selon la revendication 1, dans lequel la deuxième extrémité de la console (130 ; 130a) est configurée de sorte à s'engager dans le dispositif de gonflement (200) près d'une partie supérieure et d'une partie inférieure de la deuxième ouverture (132) lorsque le dispositif de gonflement (200) est déplacé vers la position de retenue, et à être fléchie lors de ce positionnement du dispositif de gonflement (200).

3. Module de coussin d'air (20) selon l'une des revendications 1 ou 2, dans lequel la deuxième extrémité de la console (130 ; 130a) est configurée de sorte à être fléchie par le dispositif de gonflement (200) lorsque le dispositif de gonflement (200) est reçu dans la console (100), la deuxième extrémité de la console (130 ; 130a) étant en outre configurée de sorte à exercer une force de ressort sur le dispositif de gonflement (200), poussant le dispositif de gonflement (200) dans la première ouverture de réception du dispositif de gonflement (122).

4. Module de coussin d'air (20) selon l'une quelconque des revendications 1 à 3, dans lequel la deuxième extrémité de la console (130 ; 130a) est initialement orientée à un angle prédéterminé et fléchie vers le haut à un angle réduit par suite du fonctionnement du dispositif de gonflement.

5. Module de coussin d'air (20) selon l'une quelconque des revendications 1 à 4, dans lequel la première extrémité de la console (120) est configurée de sorte à être fléchie dans une direction allant à l'écart de la deuxième extrémité de la console (130 ; 130a) et à être fléchie lors de la réception du dispositif de gonflement (200), avant de revenir vers sa configuration initiale lors de la réception du dispositif de gonflement.
